Europäisches Patentamt

European Patent Office

Office européen des brevets

(11) Veröffentlichungsnummer: **0 400 056 B1**

(12) **EUROPÄISCHE PATENTSCHRIFT**

(45) Veröffentlichungstag der Patentschrift: **26.05.93**

(51) Int. Cl.5: **C08F 265/04**

(21) Anmeldenummer: **89902637.1**

(22) Anmeldetag: **02.02.89**

(86) Internationale Anmeldenummer:
**PCT/EP89/00094**

(87) Internationale Veröffentlichungsnummer:
**WO 89/07115 (10.08.89 89/18)**

(54) **VERFAHREN ZUR HERSTELLUNG EINES ELASTOMERHALTIGEN VINYLCHLORIDPFROPFCOPOLYMERISATS.**

(30) Priorität: **02.02.88 DE 3803036**

(43) Veröffentlichungstag der Anmeldung:
**05.12.90 Patentblatt 90/49**

(45) Bekanntmachung des Hinweises auf die Patenterteilung:
**26.05.93 Patentblatt 93/21**

(84) Benannte Vertragsstaaten:
**AT BE DE FR GB IT NL SE**

(56) Entgegenhaltungen:
**EP—A— 0 195 942**
**DE—A— 1 495 802**
**US—A— 1 495 694**
**US—A— 4 208 490**

**Dialog Information Services, File 351, World Patent Index 81—89, Dialog accession no 4094672, Mitsui Toatsu Chem Inc: 'Vinyl chloride resin prepn. useful as building material by coagulating acrylic polymer latex with organic acid salt and suspension graft polymerising with vinyl chloride; PVC', JP 61043609, A, 860303, 8615 (Basic)**

(73) Patentinhaber: **WACKER—CHEMIE GMBH**
**Hanns—Seidel—Platz 4**
**W—8000 München 83(DE)**

(72) Erfinder: **GRAUER, Peter**
**Kampenwandstrasse 9**
**W—8269 Burgkirchen(DE)**

EP 0 400 056 B1

## Beschreibung

Die Erfindung betrifft ein Verfahren zur Herstellung eines elastomerhaltigen Vinylchlorid-Pfropfcopolymerisats mit hoher Schüttdichte und sehr guter Rieselfähigkeit nach dem Suspensionspolymerisationsverfahren.

Verfahren zur Herstellung von elastomerhaltigen Pfropfcopolymerisaten unter Verwendung von Vinylchlorid als Pfropfmonomer sind bekannt.

In der DE-AS 10 82 734 wird ein Verfahren zur Herstellung von polyacrylathaltigen Pfropfcopolymeren des Vinylchlorids durch Suspensionspolymerisation, in Gegenwart von Schutzkolloid und $H_2O-$ bzw. öllöslichem Initiator, unter Zugabe der Pfropfgrundlage als Emulsion, beschrieben. Das Verfahren nach der DE-AS 10 90 856 beschreibt eine verbesserte Verfahrensvariante der obigen Auslegeschrift. Als Pfropfmonomere werden auch mit Vinylchlorid mischpolymerisierbare Vinyl- und Allylverbindungen eingesetzt, um den PVC-Anteil des Pfropfcopolymeren zu elastifizieren. Eine weitere Verfahrensvariante unter Verwendung einer vernetzten Pfropfgrundlage wird in der DE-AS 10 90 857 beansprucht.

Nachteilig bei allen diesen Verfahren ist jedoch, daß sich vor allem bei höherem Elastomeranteil im Pfropfcopolymeren im Verlauf der Polymerisation Polymeranlagerungen an den Wandflächen und Ausrüstungsteilen des Polymerisationsreaktors bilden. Darüberhinaus hat das Produkt eine weite Korngrößenverteilung. Das Polymerisat neigt zum Verkleben, ist schlecht rieselfähig und verfügt nur über eine niedere Schüttdichte.

In der DE-A 14 95 694 ( USA 3,358,054) wird ein Verfahren beansprucht, bei dem als Pfropfgrundlage Vinylacetat-Ethylen-Copolymer in festem Zustand eingesetzt wird. Das feste VAE-Copolymer wird in der Vinylchlorid-Monomerphase gelöst, in Wasser dispergiert und im Suspensionspolymerisationsverfahren gepfropft. Die DE-A 14 95 802 ist eine Zusatzanmeldung zur DE-A 14 95 694, bei der, zur Vereinheitlichung der Teilchengrößenverteilung, das Gewichtsverhältnis der Wasserphase zur Summe von Pfropfsubstrat und Pfropfmonomer auf 1.5 : 1 bis 0.5 : 1 reduziert worden ist. Nachteilig bei diesen Verfahren ist die zeitraubende und aufwendige Festharzauflösung. Aufgrund der rasch ansteigenden Vikosität der Lösung ist es schwierig Festharzgehalte größer 15% zu erreichen. Weiter treten bei diesem Verfahren, vor allem bei kurzen Lösungszeiten des Festharzes, Inhomogenitäten bezüglich der Pfropfcopolymerzusammensetzung auf, die zu einer erheblichen Minderung der Produktqualität führen.

Die EP-A 195 942 betrifft ein Verfahren zur Herstellung eines rieselfähigen Polyacrylat-Vinylchlorid-Pfropfcopolymeren durch Suspensionspolymerisation in Gegenwart von Methylcellulose als Schutzkolloid. Die in Emulsion vorliegende Pfropfgrundlage wird zusammen mit dem Schutzkolloid vorgelegt, unter Zugabe einer $Ca(OH)_2$-Suspension wird die Koagulation durchgeführt und nach der Neutralisation, unter Zugabe des Peroxidinitiators und Aufpressen des Vinylchlorids, die Pfropfung durchgeführt. Nachteilig bei diesem Verfahren ist, daß damit nur relativ grobe Produkte mit niederem Schüttgewicht zu erhalten sind.

In der US-A-4 208 490 wird ein Verfahren zur Herstellung von Propfcopolymeren beansprucht, bei dem das elastomere Propfsubstrat als Emulsion zusammen mit dem ethylenisch ungesättigten Propfmonomer und dem Initiator vorgelegt wird und die Polymerisation als Emulsionspolymerisation bis zu einem Umsatz von 5% des Propfmonomeren geführt wird. Dann erst wird, nach Zugabe des Schutzkolloids, die Polymerisation als Suspensionspolymerisation fortgesetzt, ohne daß die als Emulsion zugegebene Propfgrundlage zur Koagulation gebracht wird.

Es bestand daher die Aufgabe, ein Verfahren zur Herstellung von elastomerhaltigen Vinylchloridpfropfcopolymeren mit hohem Elastomeranteil von bis zu 65 Gew.% zu entwickeln, ohne daß die oben beschriebenen Nachteile bezüglich Produktqualität und Verarbeitbarkeit auftreten. Vor allem sollte das Pfropfcopolymerisat über eine hohe Schüttdichte, sehr gute Rieselfähigkeit und homogene Weichphasenverteilung verfügen.

Überraschenderweise ist dies durch das erfindungsgemäße Verfahren der Dosierung und durch die Verwendung eines speziellen Schutzkolloids gelungen.

Gegenstand der Erfindung ist ein Verfahren zur Herstellung eines elastomerhaltigen Vinylchloridpfropfcopolymerisats mit einem Elastomeranteil von bis zu 65 Gew.% durch Suspensionspolymerisation bei einer Temperatur von 50 bis 80°C und unter einem Druck, der maximal dem Sättigungsdruck von Vinylchlorid bei der gewählten Polymerisationstemperatur entspricht, und einem Gewichtsverhältnis von Wasser zur Summe von Pfropfsubstrat und Pfropfmonomer von 1.6 : 1 bis 1 : 1, dadurch gekennzeichnet, daß

a) die Elastomerdispersion mit dem Polymerisationswasser, dem Puffer und dem Initiator vorgelegt werden,

b) ein Fällungsmittel als wäßrige Lösung zugegeben wird,

c) erst nach erfolgter Fällung das Schutzkolloid und das Pfropfmonomer, sowie gegebenenfalls der Regler, zudosiert werden, und

d) als Schutzkolloid Polyvinylalkohol mit einem Hydrolysegrad ≥ 70% und einer Viskosität ≥ 5 cp (5 x $10^{-3}$ Pa.s) verwendet wird.

Als Pfropfgrundlage werden Vinylacetat/Ethylen − Copolymere mit einem Ethylengehalt von 20 bis 70 Gew.% oder Homo − bzw. Copolymere der Acrylsäureester eingesetzt. Die Copolymere der Acrylsäure − ster bzw. die VAE − Copolymere können beispielsweise mehrfach ethylenisch ungesättigte, vernetzend wirkende Verbindungen, wie Vinyl − und Allylester ungesättigter $C_3$ − bis $C_8$ − Monocarbonsäuren, Mono − oder Divinyl − und Diallylester von gesättigten oder ungesättigten $C_4$ − bis $C_{10}$ − Dicarbonsäuren, sowie Triallylcyanurat und andere Allylether polyfunktioneller Alkohole, bis zu einem Gehalt von 0.5 Gew.%, enthalten. Vorzugsweise werden vernetzte Homopolymere von Estern der Acrylsäure und gesättigten Alkoholen mit 2 bis 18 C − Atomen eingesetzt. Besonders bevorzugt wird vernetztes Polybutylacrylat.

Das Elastomer wird vorzugsweise als Latex mit einem Festgehalt von 30 bis 60 Gew.% eingesetzt. Zur Pfropfcopolymerisation wird der Elastomerlatex zusammen mit dem Initiatorsystem und weiteren Zusatz − stoffen, wie zum Beispiel Puffer, vorgelegt.

Als Initiatoren werden monomerlösliche Radikalbildner aus der Gruppe der Peroxide oder Azoinitiatoren, mit einer Halbwertszeit bei der jeweiligen Polymerisationstemperatur von einer bis 20 Stunden, eingesetzt. Als Peroxide können zum Beispiel Dialkyl −, Diacyl − oder Diaroylperoxide wie Dilauroyl − oder Diacetylp − eroxid, oder Peroxodicarbonate wie Di − tert. − butylcyclohexyl − oder Dimyristylperoxodicarbonat, oder Perester, eingesetzt werden. Gebräuchliche Azoinitiatoren sind beispielsweise Azobisisobutyronitril oder Azobisdimethylvaleronitril. Gegebenenfalls können zusätzlich auch Reduktionsmittel eingesetzt werden. Die Katalysatoren können einzeln oder im Gemisch in Mengen von vorzugsweise 0.01 bis 1.0 Gew.%, bezogen auf die Pfropfmonomeren, eingesetzt werden.

Gebräuchliche Puffer sind Na − carbonat, Na − tetraborat, Na − hydrogenphosphat, Alkaliphosphate und − acetate. Der Puffer wird üblicherweise in Konzentrationen von 0.005 bis 0.5 Gew.%, bezogen auf das Pfropfmonomere, eingesetzt.

Nach Vorlegen des Elastomerlatex wird dieser durch Zugabe eines Fällungsmittels koaguliert. Als Fällungsmittel werden vorzugsweise Alkali − oder Erdalkalisalze von anorganischen oder organischen Säuren eingesetzt. Beispiele dafür sind $CaCl_2$, $BaCl_2$ oder Ca − acetat. Das Fällungsmittel wird als wäßrige Lösung, vorzugsweise in einer Konzentration von bis zu 20 Gew.%, eingesetzt.

Nach erfolgter Koagulation werden das Schutzkolloid und das Pfropfmonomere, gegebenenfalls unter Zusatz eines Reglers, zugegeben.

Als Regler, zur Einstellung des K − Werts des Pfropfprodukts, können zum Beispiel Chlorkohlenwas − serstoffe wie Di − und Trichlorethylen oder Chloroform, oder aliphatische Aldehyde, in Mengen bis zu 5 Gew.%, bezogen auf die Pfropfmonomeren, eingesetzt werden.

Als Schutzkolloide werden Polyvinylalkohole mit einem Hydrolysegrad ≥ 70% und einer Viskosität ≥ 5 cp (5 x $10^{-3}$ Pa.s), vorzugsweise in einer Menge von 0.1 bis 1.0 Gew.%, bezogen auf die Pfropfmonomer − menge, verwendet.

Bevorzugtes Pfropfmonomer ist Vinylchlorid, es können aber auch Gemische von Vinylchlorid mit Vinylmonomeren, deren Homopolymere Glasübergangstemperaturen ≥ 50˚C aufweisen, eingesetzt werden. Beispiele hierfür sind Methyl(meth)acrylat, Styrol und Vinylacetat. Die Zugabemenge des Pfropfmonomeren wird so eingestellt, daß das Gewichtsverhältnis Pfropfmonomer zu Elastomer 1.15 : 1 bis 1.7 : 1 beträgt. Die Polymerisationstemperatur beträgt 50 bis 80˚C, vorzugsweise 55 bis 70˚C, entsprechend dem ge − wünschten K − Wert des Endprodukts. Das Gewichtsverhältnis von Wasser zur Summe von Pfropfsubstrat und Pfropfmonomer beträgt 1.6 : 1 bis 1 : 1. Bei einem Druckabfall von 3 bis 5 bar (3 x $10^5$ Pa bis 5 x $10^5$ Pa) wird die Polymerisation durch Abdestillation des nicht umgesetzten Vinylchlorids beendet.

Nach der Entgasung wird das Produkt über Schleuder oder Zentrifuge entwässert und im Trockner getrocknet.

Die nach dem erfindungsgemäßen Verfahren hergestellten Pfropfcopolymere besitzen eine hohe Schüttdichte (480 bis 630 g/l), sehr gute Rieselfähigkeit und eine homogene Weichphasenverteilung. Schüttdichte und Rieselfähigkeit sind mit der von VC − Homopolymeren nach dem S − Verfahren vergleich − bar.

Die Pfropfcopolymerisate sind sowohl für die Anwendung als Schlagzähmodifier für Extrusions − wie Spritzgußzwecke, als auch in Reinform für weichmacherfreie Weich − PVC − Anwendungen geeignet.

Die folgenden Beispiele dienen zur weiteren Erläuterung der Erfindung.

Beispiele 1 bis 8:

In den Beispielen 1 bis 8 wird die erfindungsgemäße Verfahrensweise zur Herstellung elastomerhaltiger VC − Propfcopolymerisate angewendet.

Die bei der Polymerisation eingesetzten Mengen an Wasser, die Art und Menge an Puffersubstanzen, Initiatoren, Elastomerdispersion, Ca − Salz, Polyvinylalkohol − Schutzkolloid, Regler, VC − Monomer bzw. Comonomere sind in Tabelle 1 aufgeführt. Desgleichen die Polymerisationstemperatur, sowie der Druck − abfall, bei dem die Polymerisation abgebrochen wird. Weiter sind in Tabelle 1 die Rieselfähigkeit, Schüttdichte und der Elastomergehalt der in den Beispielen erhaltenen VC − Pfropfcopolymerisate angege − ben.

In den Beispielen 1 bis 8 werden das Wasser, die Puffersubstanzen, die Initiatoren, sowie die Elastomerdispersion vorgelegt. Sodann wird der Autoklav geschlossen und kurz evakuiert. Es erfolgt die Zugabe des Fällungsmittels als 10 %ige wäßrige Lösung. Nach 15 − minütigem Rühren wird das Schutz − kolloid zudosiert und nochmals evakuiert. Als nächstes werden gegebenenfalls der Regler bzw. das Comonomere (hier VAc) zugegeben. Daran anschließend wird das VC − Monomere eindosiert und nochmals 45 Minuten gerührt. Der Ansatz wird daraufhin auf die gewünschte Polymerisationstemperatur aufgeheizt und bis zum gewünschten Druckabfall polymerisiert. Nach dem Entfernen von nichtumgesetztem VC − Monomer wird der Autoklav abgekühlt und die Suspension abgelassen. Das Produkt wird abfiltriert und im Vakuum bei 50 ˚C getrocknet.

Die Bestimmung der Schüttdichte erfolgt nach DIN 53468. Die Rieselfähigkeit wird nach DIN 53492 (Düse 1, Auslauföffnung 10 mm) bestimmt.

Vergleichsbeispiele 1 bis 3:

Die bei der Polymerisation eingesetzten Mengen an Wasser, die Art und Menge an Puffersubstanzen, Initiator, Elastomerdispersion, Ca − Salz, Schutzkolloid und VC − Monomer sind in Tabelle 2 angegeben. Weiter sind in dieser Tabelle die Polymerisationstemperatur und der Druckabfall, bei dem die Polymerisa − tion abgebrochen wird, sowie Schüttdichte und Rieselfählgkeit der Produkte der Vergleichsbeispiele aufgeführt.Die Bestimmung der Schüttdichte und Rieselfähigkeit erfolgt analog der Beispiele 1 bis 8.

Vergleichsbeispiel 1:

Wasser, Puffersubstanzen, Initiator und Elastomerdispersion werden zusammen mit dem Schutzkolloid bei Raumtemperatur vorgelegt; der Reaktor wird geschlossen und sorgfältig evakuiert. Danach wird das VC − Monomere zudosiert, 15 Minuten gerührt und erst am Schluß das Fällungsmittel zugegeben. Nach einstündigem Rühren wird auf 58 ˚C aufgeheizt und bis zu einem Druckabfall von 3.5 bar (3.5 x $10^5$ Pa) polymerisiert. Es resultiert ein sehr grobes Produkt.

Vergleichsbeispiel 2:

Es wird analog Vergleichsbeispiel 1 vorgegangen mit dem Unterschied, daß anstelle von Polyvinylal − kohol Celluloseether als Schutzkolloid verwendet wird. Man erhält ein extrem grobes Produkt (Korndurchmesser 1 − 5 mm !). Die Schüttdichte und Rieselfähigkeit sind nicht meßbar.

Vergleichsbeispiel 3:

Wie Vergleichsbeispiel 1, nur erfolgt die Zugabe des Schutzkolloids nicht in der Vorlage, sondern erst 15 Minuten nach der Zugabe des Fällungsmittels. Auch hier erhält man ein sehr grobes Produkt.

Tabelle 3 zeigt die Korngrößenverteilung der VC − Pfropfcopolymerisate bei erfindungsgemäßem Vor − gehen (Beispiel 1) und der Produkte aus Vergleichsbeispiele 1 und 2.

Nur bei der erfindungsgemäßen Vorgehensweise erhält man Produkte mit optimalen Eigenschaften bezüglich Korngröße, Schüttdichte und Rieselfähigkeit.

Tabelle 1:

| | Bsp. 1 | Bsp. 2 | Bsp. 3 | Bsp. 4 | Bsp. 5 | Bsp. 6 | Bsp. 7 | Bsp.8 |
|---|---|---|---|---|---|---|---|---|
| Wasser | 184 | 159 | 159 | 184 | 159 | 180 | 130 | 135 |
| Zitronensäure | 0,01 | 0,01 | 0,01 | 0,01 | 0,01 | 0,01 | 0,01 | 0,01 |
| $Na_2HPO_4$ | 0,01 | 0,01 | 0,01 | 0,01 | 0,01 | 0,01 | 0,01 | 0,01 |
| Laurylperoxid | 0,05 | 0,07 | 0,08 | 0,08 | 0,08 | 0,06 | 0,04 | 0,04 |
| t-Butyl-cyclo-hexyl-peroxo-dicarbonat | 0,025 | – | – | – | – | 0,02 | – | – |
| Myristylper-carbonat | – | – | – | – | – | – | 0,01 | – |
| Polybutyl-acrylat (40 % in $H_2O$) | 158 | 200 | 200 | 158 | 200 | 200 | – | – |
| VAE-Dispersion (40 % in $H_2O$) | – | – | – | – | – | – | 200 | 190 |
| $CaCl_2$ * | 1,2 | 1,4 | 1,4 | 1,2 | 1,4 | 1,3 | 2 | 2 |
| Polyvinylalkohol (Hydrolysegrad:82%) | 0,3 | 0,4 | 0,5 | 0,5 | 0,5 | 0,4 | 0,4 | 0,4 |
| Trichlorethylen | – | – | – | 2,0 | 2,0 | – | – | – |
| Vinylacetat-Monomer | – | – | 4 | – | – | – | – | – |
| Vinylchlorid-Monomer | 100 | 100 | 96 | 100 | 100 | 100 | 100 | 100 |

* Bsp. 2 bis Bsp. 5: Ca-acetat

EP 0 400 056 B1

Fortsetzung Tabelle 1:

| | Bsp.1 | Bsp.2 | Bsp.3 | Bsp.4 | Bsp.5 | Bsp. 6 | Bsp. 7 | Bsp. 8 |
|---|---|---|---|---|---|---|---|---|
| Polymerisations-<br>temp. [° C] | 58 | 65 | 65 | 65 | 65 | 58 | 60 | 65 |
| Druckabfall<br>$[\times 10^5 Pa]$ | 3,5 | 4,5 | 4,5 | 3,5 | 4,5 | 4,5 | 4,5 | 4,5 |
| Rieselfähigkeit<br>[sec] | 24,0 | 22,0 | 25,0 | 23,4 | 22,2 | 24,6 | 17,4 | 15,5 |
| Schüttdichte<br>[g/l] | 575 | 610 | 481 | 540 | 600 | 630 | 517 | 612 |
| Elastomeranteil<br>[Gew.%] | 46,8 | 52,9 | 52,2 | 51,7 | 54,3 | 49,3 | 50,7 | 52,1 |

Tabelle 2:     * Methylhydroxypropylcellulose

|  | Vergl.beispiel 1 | Vergl.beispiel 2 | Vergl.beispiel 3 |
|---|---|---|---|
| Wasser | 155 | 155 | 155 |
| Zitronensäure | 0,01 | 0,01 | |
| $Na_2HPO_4$ | 0,01 | 0,01 | 0,01 |
| Myristylpercarbonat | 0,05 | 0,05 | 0,05 |
| Polybutylacrylat (40 % in $H_2O$) | 158 | 158 | 158 |
| $CaCl_2$ | 1,4 | 1,4 | 1,4 |
| Polyvinylalkohol (Hydrolysegrad: 82 %) | 0,4 | – | 0,4 |
| Celluloseether (MHPC*, 100mPa.s) in 2%iger Lsg. | – | 0,4 | – |
| Vinylchlorid-Monomer | 100 | 100 | 100 |
| Polymerisationstemp. $[°C]$ | 58 | 58 | 58 |
| Druckabfall $[\times 10^5 Pa]$ | 3,5 | 3,5 | 3,5 |
| Rieselfähigkeit $[sec]$ | 39,1 | nicht meßbar | 26,2 |
| Schüttdichte $[g/l]$ | 540 | " | 575 |

EP 0 400 056 B1

Tabelle 3:

**Summensiebanalyse [%]**

| | > 300 µm | > 200 µm | > 100 µm | > 60 µm | > 40 µm |
|---|---|---|---|---|---|
| Beispiel 1 | 6 | 16 | 59 | 82 | 94 |
| Vergl.beispiel 1 | 27 | 47 | 76 | 89 | 96 |
| Vergl.beispiel 2 | Korngröße 1 – 5 mm | | | | |
| Vergl.beispiel 3 | 41 | 56 | 81 | 96 | 100 |

## Patentansprüche

1. Verfahren zur Herstellung eines elastomerhaltigen Vinylchloridpfropfcopolymerisats mit einem Elasto – meranteil von bis zu 65 Gew.% durch Suspensionspolymerisation bei einer Temperatur von 50 bis 80°C und unter einem Druck, der maximal dem Sättigungsdruck von Vinylchlorid bei der gewählten Polymerisationstemperatur entspricht, und einem Gewichtsverhältnis von Wasser zur Summe von Pfropfsubstrat und Pfropfmonomer von 1.6 : 1 bis 1 : 1, dadurch gekennzeichnet, daß

a) die Elastomerdispersion mit dem Polymerisationswasser, Puffer und dem Initiator vorgelegt werden,

b) ein Fällungsmittel als wäßrige Lösung zugegeben wird,

c) erst nach erfolgter Fällung das Schutzkolloid und das Pfropfmonomer, sowie gegebenenfalls der Regler, zudosiert werden, und

d) als Schutzkolloid Polyvinylalkohol mit einem Hydrolysegrad ≥ 70% und einer Viskosität ≥ 5 cp (5 x $10^{-3}$ Pa.s) verwendet wird.

2. Verfahren nach Anspruch 1, dadurch gekennzeichnet, daß als Elastomer vernetztes Polybutylacrylat vorgelegt wird.

3. Verfahren nach Anspruch 1 oder 2, dadurch gekennzeichnet, daß als Fällungsmittel eine wäßrige Ca‐acetat‐Lösung eingesetzt wird.

4. Verwendung des nach einem der obigen Ansprüche hergestellten Vinylchloridpfropfcopolymerisats als Schlagzähmodifier oder in der weichmacherfreien Weich‐PVC‐Anwendung.

## Claims

1. Process for the preparation of an elastomer‐containing vinyl chloride graft copolymer having an elastomer content of up to 65% by weight by suspension polymerisation at a temperature of 50 to 80°C under a pressure which corresponds at most to the saturation pressure of vinyl chloride at the polymerisation temperature chosen, and a weight ratio of water to the sum of graft substrate and grafting monomer of 1.6 : 1 to 1 : 1, characterised in that

a) the elastomer dispersion is initially introduced into the vessel, together with the polymerisation water, the buffer and the initiator,

b) the precipitating agent is added as an aqueous solution,

c) only after the precipitation has taken place, the protective colloid and the grafting monomer, and if appropriate the regulator are metered in, and

d) polyvinyl alcohol having a degree of hydrolysis of ≥ 70% and a viscosity of ≥ 5 cp (5 x $10^{-3}$ Pa.s) is used as the protective colloid.

2. Process according to Claim 1, characterised in that crosslinked polybutyl acrylate is initially introduced as the elastomer.

3. Process according to either of Claims 1 or 2, characterised in that an aqueous Ca acetate solution is employed as the precipitating agent.

4. Use of the vinyl chloride graft copolymer prepared according to any one of the above claims as an impact modifier or in plasticiser‐free flexible PVC use.

## Revendications

1. Procédé pour préparer un copolymère greffé du chlorure de vinyle contenant un élastomère dont la teneur en élastomère peut aller jusqu'à 65 % en poids, par polymérisation en suspension à une température de 50 à 80°C et sous une pression au plus égale à la pression de saturation du chlorure de vinyle à la température de polymérisation choisie, et avec un rapport pondéral de l'eau à la somme du substrat de greffage et du monomère greffon compris entre 1,6 : 1 et 1 : 1, procédé caractérisé en ce que :

a) on met dans le récipient la dispersion de l'élastomère avec l'eau de polymérisation, le tampon et l'amorceur,

b) on ajoute un agent de précipitation sous la forme d'une solution aqueuse,

c) après la précipitation et seulement après on introduit progressivement le colloïde protecteur et le monomère greffon, ainsi que, s'il y a lieu, le régulateur, et

d) on utilise comme colloïde protecteur un poly‐(alcool vinylique) qui a un degré d'hydrolyse d'au moins 70 % et une viscosité d'au moins 5 cp (5x$10^{-3}$ Pa.s).

**2.** Procédé selon la revendication 1 caractérisé en ce qu'on met dans le récipient dès le départ, comme élastomère, du poly – (acrylate de butyle) réticulé.

**3.** Procédé selon l'une des revendication 1 et 2, caractérisé en ce qu'on utilise comme agent de précipitation une solution aqueuse d'acétate de calcium.

**4.** Application du copolymère greffé de chlorure de vinyle préparé selon l'une quelconque des revendications précédentes comme modificateur de résilience ou dans l'application de PVC mou dépourvu de plastifiant.